# EUROPÄISCHE PATENTSCHRIFT

(11) **EP 2 406 514 B1**
(45) Veröffentlichungstag und Bekanntmachung des Hinweises auf die Patenterteilung: **09.01.2013**
(21) Anmeldenummer: 10708925.2
(22) Anmeldetag: 06.03.2010
(51) Int. Cl.: F16D 23/02

(54) **VERFAHREN ZUR HERSTELLUNG EINES RINGES EINER SYNCHRONISATIONSEINRICHTUNG UND RING EINER SYNCHRONISATIONSEINRICHTUNG**
METHOD FOR PRODUCING A RING OF A SYNCHRONIZING DEVICE, AND A RING OF A SYNCHRONIZING DEVICE
PROCÉDÉ DE FABRICATION D'UNE BAGUE DE DISPOSITIF DE SYNCHRONISATION, ET BAGUE DE DISPOSITIF DE SYNCHRONISATION CORRESPONDANTE

(30) Priorität: 12.03.2009 DE 102009012961
(43) Veröffentlichungstag der Anmeldung: 18.01.2012
(73) Patentinhaber: Aktiebolaget SKF, 415 50 Göteborg (SE)
(72) Erfinder: DILJE, Alexander, 97422 Schweinfurt (DE); HUHN, Norbert, 97424 Schweinfurt (DE); LANG, Ulrich, 78570 Mühlheim (DE)
(74) Vertreter: Schonecke, Mitja
(86) Internationale Anmeldenummer: PCT/EP2010/001401
(87) Internationale Veröffentlichungsnummer: WO 2010/102765

(56) Entgegenhaltungen:
- WO-A1-2009/092553
- AT-B- 410 015
- DE-A1- 19 858 987
- FR-A1- 2 596 121
- US-A- 4 878 282
- US-A- 5 038 628

## Beschreibung

Die Erfindung betrifft ein Verfahren zur Herstellung eines Ringes einer Synclu-onisationseimichtung, wobei der Ring eine Reibfläche zum Zusammenwirken mit der Reibfläche eines weiteren Rings der Synchronisationseinrichtung aufweist sowie mindestens eine Gleitfläche zum gleitgelagerten Sitz auf einer Anlagefläche. Des Weiteren betrifft die Erfindung einen Ring einer Synchronisationseinrichtung.

Ein Verfahren zum Herstellen eines Rings der genannten Art sowie ein entsprechender Ring sind im Stand der Technik hinlänglich bekannt. Insbesondere in handgeschalteten Getrieben von Kraftfahrzeugen werden derartige Ringe benötigt, um beim Gangwechsel eine Anpassung der Drehzahl zweier Wellen zu erreichen, bevor diese formschlüssig gekoppelt werden.

Das Hauptaugenmerk besteht dabei darin, die Reibfläche des Rings so auszugestalten, dass diese eine hohe Verschleißfestigkeit hat, so dass eine große Anzahl Schaltvorgänge synchronisiert werden kann, bevor sich Verschleiß bemerkbar macht.

Für den Betrieb und insbesondere zur Erreichung eines hohen Wirkungsgrads des Getriebes ist es darüber hinaus erforderlich, dass die beteiligten Synchronringe nur ein geringes Schleppmoment aufweisen, d. h. unerwünschte Reibung soll möglichst niedrig gehalten werden.

Für die Ausbildung der entsprechenden Gleitsitze von Synchronringen auf Wellenelementen bzw. an Stirnseiten benachbarter Bauteile sind im Stand der Technik keine besonderen Maßnahmen bekannt. Die WO 2009/092553 A1 offenbart eine Synchronringanordnung, bei der zwei Ringteile mit einer Klebeverbindung miteinander verbunden werden. Dabei werden in einer inneren Umfangsfläche eines zu verklebenden Rings Nuten eingebracht. In der DE 198 58 987 A1 ist ein Synchronring beschrieben, in dessen äußere Umfangsfläche Ölnuten eingearbeitet sind.

Der Erfindung liegt daher die Aufgabe zu Grunde, ein Verfahren sowie einen Ring der eingangs genannten Art so fortzubilden, dass das Schleppmoment des Rings und damit die reibungsbedingte Verlustleistung möglichst gering gehalten werden kann. Damit soll insgesamt der Wirkungsgrad des Getriebes möglichst hoch sein. Ein wichtiges Augenmerk ist dabei darauf gerichtet, dass die vorgeschlagenen Maßnahmen fertigungstechnisch möglichst kostengünstig umgesetzt werden können.

Die Lösung dieser Aufgabe durch die Erfindung ist verfahrensgemäß dadurch gekennzeichnet, dass mindestens eine der Gleitflächen eine Anzahl bogenförmiger Nuten aufweist, die durch einen Wirbeldrehprozess eingebracht werden, wobei die bogenförmigen Nuten an einer Stirnfläche des Rings angeordnet sind.

Dabei werden bevorzugt zwei Scharen bogenförmiger Nuten eingebracht, die sich schneiden. Der Schnittwinkel beträgt hierbei bevorzugt zwischen 60° und 90°.

Der vorgeschlagene Ring einer Synchronisationseinrichtung, der eine Reibfläche zum Zusammenwirken mit der Reibfläche eines weiteren Rings der Synchronisationseinrichtung aufweist sowie mindestens eine Gleitfläche zum gleitgelagerten Sitz auf einer Anlagefläche, wobei mindestens eine der Gleitflächen eine Anzahl bogenförmiger Nuten aufweist, zeichnet sich erfindungsgemäß dadurch aus, dass die bogenförmigen Nuten an einer Stirnfläche des Rings angeordnet sind.

Bevorzugt sind wiederum zwei Scharen bogenförmiger Nuten eingebracht, die sich unter dem bevorzugt genannten Winkel schneiden.

Über die Breite des Ringes können mindestens zwei Schnittpunkte sich schneidender bogenförmiger Nuten in axiale Richtung nebeneinander angeordnet sein. Dabei sind die bogenförmigen Nuten vorzugsweise äquidistant voneinander angeordnet, d. h. in gleichen Abständen positioniert.

Die maximale Tiefe der bogenförmigen Nuten liegt mit Vorteil zwischen 0,1 und 1 mm.

Der die bogenförmigen Nuten aufweisende Bereich kann dabei mit einem Gleitwerkstoff beschichtet sein. Alternativ ist es auch möglich, dass der die bogenförmigen Nuten aufweisende Bereich aus einem Gleitwerkstoff besteht.

Der Gleitwerkstoff ist bevorzugt Bronze oder Kunststoff.

Der Ring ist insbesondere Bestandteil einer Synchronisationseinrichtung eines Fahrzeuggetriebes.

Zum verfahrensgemäß vorgesehenen Wirbeln (Wirbeldrehen) der bogenförmigen Nuten sei folgendes angemerkt: Das Wirbelverfahren ist ein spanendes Bearbeitungsverfahren mit geometrisch bestimmter Schneide und kann bezüglich der Kinematik als Sonderform des Fräsens gesehen werden. Beim Außenwirbeln kommen nach innen gerichtete Schneiden zu Einsatz, beim Innenwirbeln - wie bevorzugt bei dem vorgeschlagenen Verfahren - kommen nach außen gerichtete Schneiden zum Einsatz.

Das Wirbelwerkzeug, das die Schnittgeschwindigkeit bestimmt, kreist exzentrisch positioniert mit hoher Drehzahl um das langsam drehende Werkstück. Hier werden der Werkstückrundvorschub und der Werkzeugträgerverschub in der Längsachse entsprechend der gewünschten Steigung über einen NC-Vorschub kinematisch zugeordnet. Die Schnittebene der Werkzeugschneiden wird durch Schwenken des Wirbelkopfes um dessen vertikale Achse auf die jeweilige gewünschte Steigung eingestellt. Die radiale Zustellung des Wirbelkopfes legt die Tiefe der erzeugten Nuten fest.

Beim Wirbeln werden kurze Späne mit kommaförmigen Enden von den Schneidwerkzeugen erzeugt. Obwohl es sich hier um ein Verfahren mit unterbrochenem Schnitt handelt, aber dabei eine günstige Spanbildung auftritt, können sowohl Hartmetalle spröder Qualität, die wegen des hohen Prozentsatzes an Carbiden und Nitriden günstigere Standzeiten bieten, als auch keramische Schneidstoffe verwendet werden.

Vergleicht man die Spanbildung beim Wirbeln und Fräsen, deren Bewegungsabläufe ähnlich sind, kann gesehen werden, dass hierbei unterschiedliche Kurzspan- und Schnitthöckerformen entstehen. Beim Wirbeln sind die Schnittvorgänge und Zerspankraftverläufe bei gleichem Vorschubwinkel günstiger, so dass auch dementsprechend größere Schnitt- und Vorschubgeschwindigkeiten als beim Fräsen zulässig sind.

Bei gleichem Außen- und Kerndurchmesser und festgelegter Winkelgeschwindigkeit sind die Späne beim Wirbeln und Fräsen flächengleich. Dabei ist der erzeugte Wirbelspan länger und hat eine kleinere maximale Spanstärke, so dass am Werkstück wesentlich geringere Schnittkräfte und kleinere elastische Deformationen auftreten. Zudem ergeben sich bessere Oberflächengüten als beim Fräsen.

Beim Wirbeln entsteht eine dem idealen Kreis angenäherte Polyederform, dessen kleine Erhöhungen jedoch nur einige Zehntausendstel Millimeter betragen können. Bei konstantem Vorschubwinkel treten beim Wirbeln wesentlich kleinere Fehler als beim Fräsen auf, d. h. beim Wirbeln sind höhere Vorschubwinkel möglich, ohne dass der entstehende Formfehler unzulässig ansteigt. Es ist daher möglich, die Werkstückvorschubwerte weitaus größer, nämlich etwa drei- bis viermal so hoch wie beim Fräsen, zu wählen und trotzdem noch eine sehr gute, dem Schleifen vergleichbare, Oberflächengüte zu erzielen.

Aufgrund der hohen Schnittgeschwindigkeiten und dem minimalen Schneidekreis ergeben sich hohe Vorschubwerte und kurze Zerspanungszeiten bei guter Oberflächenqualität. Im Zusammenhang mit einem anwendungsfreundlichen und wirtschaftlichen Werkzeugsystem werden Nuten mit hoher Produktivität herstellbar.

Mit der vorgeschlagenen Vorgehensweise bei der Herstellung des Rings einer Synchronisationseinrichtung bzw. durch die vorgesehene Ausgestaltung eines solchen Rings wird es möglich, in kostengünstiger Weise den Ring so auszugestalten, dass er im Betrieb ein geringes Schleppmoment aufweist, d. h. die unerwünschte Reibung des Rings ist minimiert.

Durch die eingebrachten bogenförmigen Nuten wird ein optimaler Aufbau eines Schmierfilms durch ein Schmiermittel ermöglicht, so dass ein verschleißarmes Gleiten der beteiligten Partner ermöglicht wird.

In der Zeichnung sind Ausführungsbeispiele der Erfindung dargestellt. Es zeigen:
- Fig. 1: im Radialschnitt einen Teil einer Synchronisationseinrichtung,
- Fig. 2: die Ansicht A gemäß Fig. 1 (in radiale Richtung gesehen) eines Rings der Synchronisationseinrichtung gemäß einer ersten Ausführungsform der Erfindung und
- Fig. 3: die Ansicht A gemäß Fig. 1 (in radiale Richtung gesehen) eines Rings der Synchronisationseinrichtung gemäß einer zweiten Ausführungsform der Erfindung.

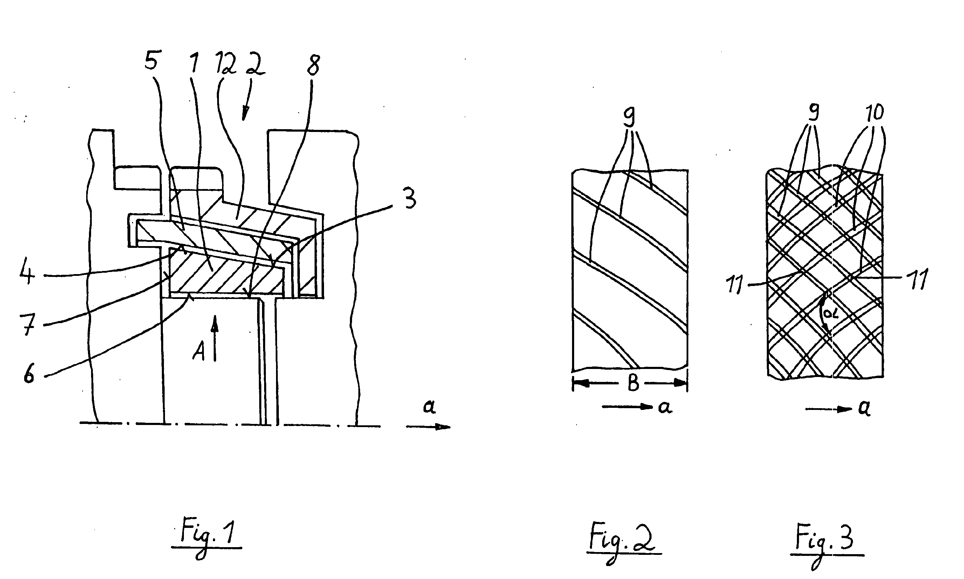

In Fig. 1 ist schematisch eine Synchronisationseinrichtung 2 dargestellt, wobei die gezeigte Synchronisationsstufe drei Synchronringe 1 (Synchroninnenring), 5 (Synchronzwischenring) und 12 (Synchronaußenring) aufweist, die in an sich bekannter Weise zusammenwirken. Zur Synchronisation werden insbesondere die radial außen liegende Reibfläche 3 des Rings 1 und die radial innen liegende Reibfläche 4 des Rings 5 durch relative Verschiebung in axiale Richtung a in Kontakt gebracht, so dass es infolge des hierbei entstehenden Reibmoments zu einer Drehzahlangleichung zwischen den Ringen 1, 5 kommt. Entsprechendes gilt für die Ringe 5 und 12. Es handelt sich hierbei um die bekannte Wirkungsweise einer Synchronisationseinrichtung eines Getriebes.

Das Augenmerk der vorliegenden Idee liegt in der Ausgestaltung der Gleitflächen 6 und 7 insbesondere, aber nicht ausschließlich des Ringes 1, mit denen dieser an mindestens einer entsprechenden Anlagefläche 8 anliegt. Bei der in Fig. 1 eingetragenen Anlagefläche 8 handelt es sich um die zylindrische Oberfläche eines wellenförmigen Teils eines der Bauteile der Synchronisationseinrichtung 2.

Zwischen der Anlagefläche 8 und der Gleitfläche 6 des Rings 1 ist eine nur geringe Reibung angestrebt, da diese sich als negatives Schleppmoment bemerkbar machen würde und den Wirkungsgrad des Getriebes herabsetzen würde.

Daher ist vorgesehen, dass die der Gleitfläche 6 eine Anzahl bogenförmiger Nuten aufweist.

In Fig. 2 ist hierbei eine Schar an äquidistant zueinander angeordneter Nuten 9 vorgesehen.

In Fig. 3 sind zwei Scharen Nuten 9 und 10 vorgesehen, die sich unter einem Schnittwinkel α kreuzen. Dabei sind über die Breite B des Rings 1 eine Anzahl Schnittpunkte 11 in axialer Richtung a nebeneinander angeordnet, mindestens zwei, vorzugsweise mindestens drei Schnittpunkte 11.

Die vorgeschlagene Ausbildung kann analog genauso für eine Stirnfläche vorgesehen werden, d. h. für die mit 7 bezeichnete Gleitfläche.

Die vorgesehenen bogenförmigen Nuten 9, 10 können nicht nur fertigungstechnisch sehr wirtschaftlich eingebracht werden, durch sie wird auch Schmiermittel (Öl) effizient im Kontaktbereich der Gleitpartner gehalten, so dass eine günstige Gleitreibung entsteht, die das geringe Schleppmoment zur Folge hat.

### Bezugszeichenliste

- 1: Ring einer Synchronisationseinrichtung
- 2: Synchronisationseinrichtung
- 3: Reibfläche
- 4: Reibfläche
- 5: weiterer Ring
- 6: Gleitfläche (zylindrische Innenfläche)
- 7: Gleitfläche (Stirnfläche)
- 8: Anlagefläche (Zentrierfläche, Gegenlauffläche)
- 9: bogenförmige Nut
- 10: bogenförmige Nut
- 11: Schnittpunkt
- 12: weiterer Ring

- α: Schnittwinkel
- B: Breite
- a: axiale Richtung

## Patentansprüche

1. Verfahren zur Herstellung eines Ringes (1) einer Synchronisationseinrichtung (2), wobei der Ring (1) eine Reibfläche (3) zum Zusammenwirken mit der Reibfläche (4) eines weiteren Rings (5) der Synchronisationseinrichtung (2) aufweist sowie mindestens eine Gleitfläche (6, 7) zum gleitgelagerten Sitz auf einer Anlagefläche (8), wobei mindestens eine der Gleitflächen (6, 7) eine Anzahl bogenförmiger Nuten (9, 10) aufweist, die durch einen Wirbeldrehprozess eingebracht werden, **dadurch gekennzeichnet, dass** die bogenförmigen Nuten (9, 10) an einer Stirnfläche (7) des Rings (1) angeordnet sind.

2. Verfahren nach Anspruch 1, **dadurch gekennzeichnet, dass** zwei Scharen bogenförmiger Nuten (9, 10) eingebracht werden, die sich schneiden.

3. Verfahren nach Anspruch 2, **dadurch gekennzeichnet, dass** der Schnittwinkel (α) zwischen 60° und 90° beträgt.

4. Ring (1) einer Synchronisationseinrichtung (2), der eine Reibfläche (3) zum Zusammenwirken mit der Reibfläche (4) eines weiteren Rings (5) der Synchronisationseinrichtung (2) aufweist sowie mindestens eine Gleitfläche (6, 7) zum gleitgelagerten Sitz auf einer Anlagefläche (8), wobei mindestens eine der Gleitflächen (6, 7) eine Anzahl bogenförmiger Nuten (9, 10) aufweist, hergestellt mit dem Verfahren nach einem der Ansprüche 1 bis 3, **dadurch gekennzeichnet, dass** die bogenförmigen Nuten (9, 10) an einer Stirnfläche (7) des Rings (1) angeordnet sind.

5. Ring nach Anspruch 4, **dadurch gekennzeichnet, dass** zwei Scharen bogenförmiger Nuten (9, 10) eingebracht sind, die sich schneiden.

6. Ring nach Anspruch 5, **dadurch gekennzeichnet, dass** über die Breite (B) des Ringes (1) mindestens zwei Schnittpunkte (11) sich schneidender bogenförmiger Nuten (9, 10) in axiale Richtung (a) nebeneinander angeordnet sind.

7. Ring nach Anspruch 5 oder 6, **dadurch gekennzeichnet, dass** der Schnittwinkel (α) zwischen 60° und 90° beträgt.

8. Ring nach einem der Ansprüche 4 bis 7, **dadurch gekennzeichnet, dass** die bogenförmigen Nuten (9, 10) äquidistant voneinander angeordnet sind.

9. Ring nach einem der Ansprüche 4 bis 8, **dadurch gekennzeichnet, dass** die maximale Tiefe der bogenförmigen Nuten (9, 10) zwischen 0,1 und 1,0 mm beträgt.

10. Ring nach einem der Ansprüche 4 bis 9, **dadurch gekennzeichnet, dass** der die bogenförmigen Nuten (9, 10) aufweisende Bereich mit einem Gleitwerkstoff beschichtet ist.

11. Ring nach einem der Ansprüche 4 bis 9, **dadurch gekennzeichnet, dass** der die bogenförmigen Nuten (9, 10) aufweisende Bereich aus einem Gleitwerkstoff besteht.

12. Ring nach Anspruch 10 oder 11, **dadurch gekennzeichnet, dass** der Gleitwerkstoff Bronze ist.

13. Ring nach Anspruch 10 oder 11, **dadurch gekennzeichnet, dass** der Gleitwerkstoff ein Kunststoff ist.

14. Ring nach einem der Ansprüche 4 bis 13, **dadurch gekennzeichnet, dass** er Bestandteil einer Synchronisationseinrichtung eines Fahrzeuggetriebes ist.

## Claims

1. Method for producing a ring (1) of a synchronizing device (2), wherein the ring (1) has a friction surface (3) for interacting with the friction surface (4) of a further ring (5) of the synchronizing device (2), and at least one sliding surface (6, 7) for being slidingly seated on a contact surface (8), wherein at least one of the sliding surfaces (6, 7) has a number of curved grooves (9, 10) which are introduced by means of a spin turning process, **characterized in that** the curved grooves (9, 10) are arranged on an end surface (7) of the ring (1).

2. Method according to Claim 1, **characterized in that** two families of curved grooves (9, 10) which intersect are introduced.

3. Method according to Claim 2, **characterized in that** the intersecting angle (α) is between 60° and 90°.

4. Ring (1) of a synchronizing device (2), the ring having a friction surface (3) for interacting with the friction surface (4) of a further ring (5) of the synchronizing device (2) and at least one sliding surface (6, 7) for being slidingly seated on a contact surface (8), wherein at least one of the sliding surfaces (6, 7) has a number of curved grooves (9, 10), produced with the method according to one of Claims 1 to 3, **characterized in that** the curved grooves (9, 10) are arranged on an end surface (7) of the ring (1).

5. Ring according to Claim 4, **characterized in that** two families of curved grooves (9, 10) which intersect are introduced.

6. Ring according to Claim 5, **characterized in that** at least two intersecting points (11) of intersecting curved grooves (9, 10) are arranged next to one another in the axial direction (a) over the width (B) of the ring (1).

7. Ring according to Claim 5 or 6, **characterized in that** the intersecting angle (α) is between 60° and 90°.

8. Ring according to one of Claims 4 to 7, **characterized in that** the curved grooves (9, 10) are arranged equidistantly from each other.

9. Ring according to one of Claims 4 to 8, **characterized in that** the maximum depth of the curved grooves (9, 10) is between 0.1 and 1.0 mm.

10. Ring according to one of Claims 4 to 9, **characterized in that** the region having the curved grooves (9, 10) is coated with a sliding material.

11. Ring according to one of Claims 4 to 9, **characterized in that** the region having the curved grooves (9, 10) is composed of a sliding material.

12. Ring according to Claim 10 or 11, **characterized in that** the sliding material is bronze.

13. Ring according to Claim 10 or 11, **characterized in that** the sliding material is a plastic.

14. Ring according to one of Claims 4 to 13, **characterized in that** the ring is part of a synchronizing device of a vehicle gearbox.

## Revendications

1. Procédé de fabrication d'une bague (1) d'un dispositif de synchronisation (2), la bague (1) présentant une surface de friction (3) pour coopérer avec la surface de friction (4) d'une autre bague (5) du dispositif de synchronisation (2), et au moins une surface de glissement (6, 7) pour l'assujettissement glissant sur une surface d'appui (8), au moins l'une des surfaces de glissement (6, 7) présentant une pluralité de rainures de forme arquée (9, 10), qui sont réalisées par un processus de tournage tourbillonnaire, **caractérisé en ce que** les rainures de forme arquée (9, 10) sont disposées sur une surface frontale (7) de la bague (1).

2. Procédé selon la revendication 1, **caractérisé en ce que** deux groupes de rainures de forme arquée (9, 10) sont pratiqués, lesquels se coupent.

3. Procédé selon la revendication 2, **caractérisé en ce que** l'angle de coupe (α) est compris entre 60° et 90°.

4. Bague (1) d'un dispositif de synchronisation (2), qui présente une surface de friction (3) pour coopérer avec la surface de friction (4) d'une autre bague (5) du dispositif de synchronisation (2), et au moins une surface de glissement (6, 7) pour l'assujettissement glissant sur une surface d'appui (8), au moins l'une des surfaces de glissement (6, 7) présentant une pluralité de rainures de forme arquée (9, 10), qui sont fabriquées avec le procédé selon l'une quelconque des revendications 1 à 3, **caractérisée en ce que** les rainures de forme arquée (9, 10) sont disposées sur une surface frontale (7) de la bague (1).

5. Bague selon la revendication 4, **caractérisée en ce que** deux groupes de rainures de forme arquée (9, 10) sont pratiqués, lesquels se coupent.

6. Bague selon la revendication 5, **caractérisée en ce qu'**au moins deux points d'intersection (11) de rainures de forme arquée (9, 10) se coupant, sont disposés l'un à côté de l'autre dans la direction axiale (a) sur la largeur (B) de la bague (1).

7. Bague selon la revendication 5 ou 6, **caractérisée en ce que** l'angle de coupe (α) est compris entre 60° et 90°.

8. Bague selon l'une quelconque des revendications 4 à 7, **caractérisée en ce que** les rainures de forme arquée (9, 10) sont disposées de manière équidistante les unes des autres.

9. Bague selon l'une quelconque des revendications 4 à 8, **caractérisée en ce que** la profondeur maximale des rainures de forme arquée (9, 10) est comprise entre 0,1 et 1,0 mm.

10. Bague selon l'une quelconque des revendications 4 à 9, **caractérisée en ce que** la région présentant les rainures de forme arquée (9, 10) est revêtue d'un matériau glissant.

11. Bague selon l'une quelconque des revendications 4 à 9, **caractérisée en ce que** la région présentant les rainures de forme arquée (9, 10) se compose d'un matériau glissant.

12. Bague selon la revendication 10 ou 11, **caractérisée en ce que** le matériau glissant est le bronze.

13. Bague selon la revendication 10 ou 11, **caractérisée en ce que** le matériau glissant est un plastique.

14. Bague selon l'une quelconque des revendications 4 à 13, **caractérisée en ce qu'**elle fait partie d'un dispositif de synchronisation d'une transmission de véhicule.
